# EUROPEAN PATENT APPLICATION

(11) **EP 3 457 006 A1**
(43) Date of publication of application: **20.03.2019**
(21) Application number: 17795919.4
(22) Date of filing: 20.04.2017
(51) Int. Cl.: F16J 15/3212, F16J 15/3204

(54) **DUST SEAL**

(30) Priority: 10.05.2016 JP 2016094400
(71) Applicant: NOK Corporation, Tokyo 105-8585 (JP)
(72) Inventor: EGUCHI Nobuyuki, Kitaibaraki-shi Ibaraki 319-1535 (JP)
(74) Representative: TBK
(86) International application number: PCT/JP2017/015824
(87) International publication number: WO 2017/195558

(57) **Abstract**

In a dust seal (1), reinforcing rings (11, 12) held in a housing (100) are provided with a seal lip (13), a tip of which is brought into a close and slidable contact with the outer peripheral surface of a shaft (200) inserted through a shaft hole (101) in the housing (100) so as to be movable back and forth in the axial direction and a plate spring (14) biasing the seal lip (13) toward the outer peripheral surface of the shaft (200) to compensate for the tension force of the seal lip (13). In the dust seal (1), in order to prevent plastic deformation of the plate spring (14) caused by axial eccentricity and secure excellent sealability, a guide ring (15) supported by the reinforcing rings (11, 12) is disposed on the axial outside of the seal lip (13) and the shaft (200) inserted through the inner periphery is held concentrically with the reinforcing rings (11, 12).

## Description

### Technical Field

The present invention relates to a dust seal mounted in a hydraulic cylinder device or the like of construction machinery or industrial machinery, for example, to prevent the entrance of foreign substances from the outside into an annular gap between a shaft hole and a shaft of a housing.

### Background Art

A hydraulic cylinder device for use in construction machinery and the like has been provided with a rod seal system in which a plurality of stages of seal devices are arranged in the axial direction in order to seal an annular gap between a housing provided in a cylinder and a shaft moving back and forth in the axial direction by a piston receiving hydraulic pressure in the cylinder. For the outermost seal device among the plurality of stages of the seal devices, a dust seal preventing the entrance of foreign substances from the outside has been used.

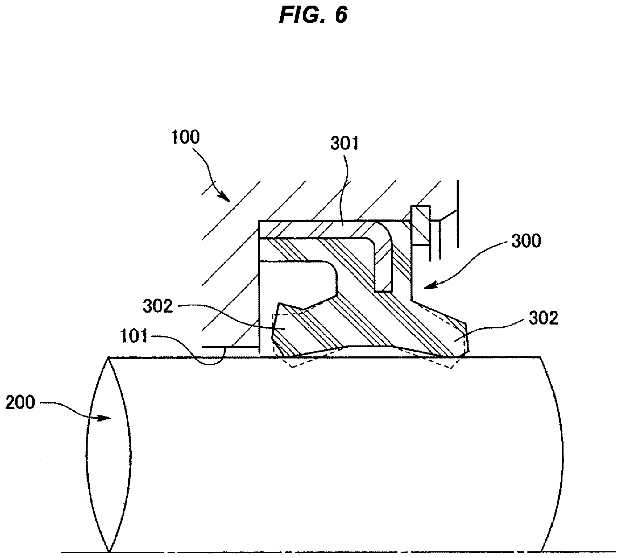

FIG. 6 illustrates an example of a conventional dust seal 300. The dust seal 300 is provided with a metal reinforcing ring 301 and seal lips 302 in an annular gap between a housing 100 in a cylinder end portion in a hydraulic cylinder device and a shaft 200 inserted through a shaft hole 101 in the housing 100 so as to be movable back and forth in the axial direction (for example, see the following Patent Literatures 1 and 2). The dust seal 300 is provided with the metal reinforcing ring 301 and the seal lips 302 integrally molded by a rubber elastic body in the reinforcing ring 301 (for example, see the following Patent Literatures 1 and 2), in which the seal lips 302 are brought into a close and slidable contact with the outer peripheral surface of the shaft 200.

In this kind of the dust seal 300, the seal lips 302 having a shape illustrated by the dashed line in the figure in a non-mounting state closely contact the outer peripheral surface of the shaft 200 in a state of being appropriately deformed so as to enlarge the diameter. Thus, interference required for preventing the entrance of muddy water or dust from the outside space on the right side in the figure is given to the outer peripheral surface of the shaft 200. However, it is known that the seal lips 302 containing a rubber elastic body cause stress relaxation referred to as "permanent set in fatigue" with time to reduce the interference to the outer peripheral surface of the shaft 200.

Therefore, a dust seal 300 is mentioned which is configured so that a metal annular plate spring 303 is mounted in an annular groove in the outer periphery of a seal lip 302 and the tension force of the seal lip 302 is compensated by the elastic biasing force in the radial direction of the plate spring 303 as illustrated in FIG. 7 (for example, see the following Patent Literature 3).

### Prior Art Documents

### Patent Documents

Patent Document 1: Japanese Unexamined Patent Publication No. 2010-101490
Patent Document 2: Japanese Unexamined Patent Publication No. 2015-232337
Patent Document 3: Japanese Unexamined Patent Publication No. 2015-135137

### Summary of Invention

### Problem to be Solved by the Invention

The dust seal 300 illustrated in FIG. 7 has a concern that, when the axial center of a shaft 200 causes excessive eccentricity ΔO to a shaft hole 101 of a housing 100 in a process of placing the dust seal 300 into a seal mounting groove 102 formed in an outer end portion of the shaft hole 101 in the housing 100 beforehand, and then inserting the shaft 200 into the shaft hole 101 in assembling a device or when the excessive eccentricity ΔO is caused during use as illustrated in FIG. 8, the plate spring 303 receives deformation exceeding the elastic limit through the seal lip 302 to be plastically deformed as illustrated in FIG. 9, so that the radial direction biasing force compensating for the tension force of the seal lip 302 is impaired.

It is a technical problem to be solved of the present invention to prevent plastic deformation of a plate spring, which compensates for the tension force of a seal lip, caused by axial eccentricity to secure excellent sealability in a dust seal having the plate spring.

### Means for Solving the Problem

A dust seal of the present invention is provided with reinforcing rings held on a housing side, a seal lip which is provided in the reinforcing ring and a tip of which is brought into a close and slidable contact with the outer peripheral surface of a shaft inserted through a shaft hole in the housing so as to be movable back and forth in the axial direction, a plate spring held on the inner peripheral side of the reinforcing ring and biases the seal lip toward the outer peripheral surface of the shaft, and a guide ring disposed on the axial outside of the seal lip and supported by the reinforcing rings, in which the guide ring, through the inner periphery of which the shaft is inserted, holds the shaft concentrically with the reinforcing ring.

As one embodiment, the reinforcing rings are attached to the housing side through an outer peripheral elastic body.

As another embodiment, in the guide ring, a scraper portion which is projected to the axial outside and in which the diameter of the outer peripheral surface decreases toward the axial outside is formed in an inner diameter portion thereof.

### Effect of the Invention

According to the dust seal of the present invention, in a process of placing the dust seal into the housing beforehand, and then inserting the shaft into the shaft hole in the housing, the shaft is guided concentrically with the reinforcing rings of the dust seal by the guide ring of the dust seal and concentrically held by the guide ring also in a usage state. Therefore, excessive eccentricity is not caused between the shaft and the reinforcing rings, and thus the plate spring is prevented from receiving excessive deformation through the seal lip and being plastically deformed and the tension force of the seal lip is secured by the plate spring. Moreover, due to the fact that the guide ring is disposed on the axial outside of the seal lip, the guide ring has a function of peeling off and removing deposits on the outer peripheral surface of the shaft accompanying the back-and-forth movement of the shaft. Therefore, excellent sealability can be maintained.

### Brief Description of Drawings

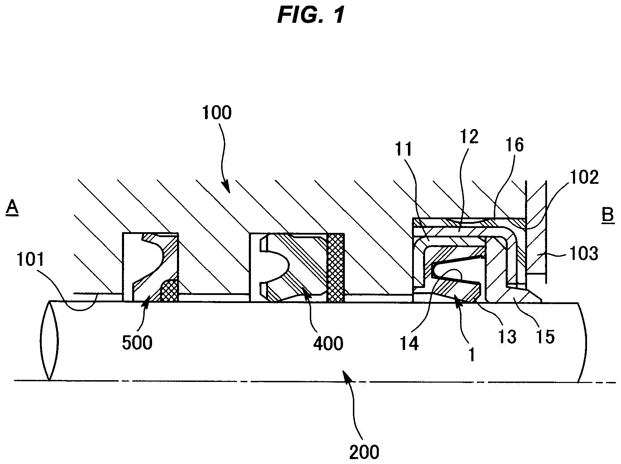

FIG. 1 is a half cross-sectional view cut along the plane passing through the axial center illustrating a preferable embodiment of a dust seal according to the present invention together with a rod seal system containing the dust seal.

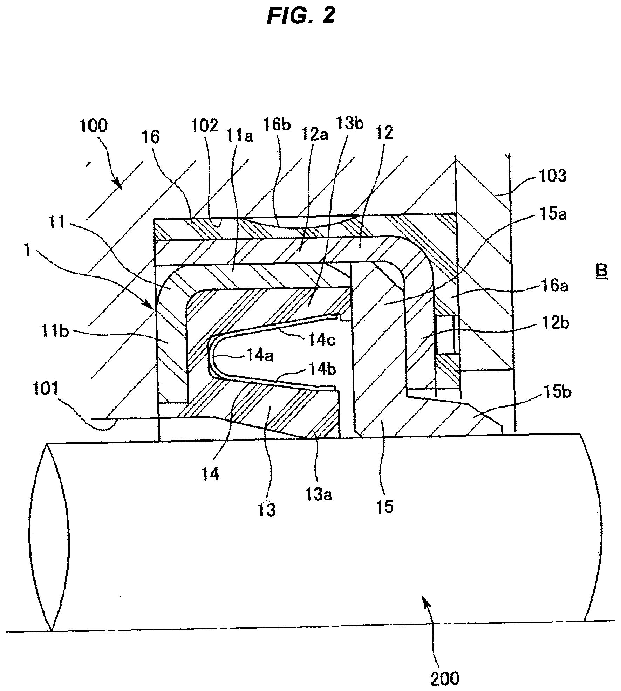

FIG. 2 is a half cross-sectional view cut along the plane passing through the axial center illustrating a mounting state of the preferable embodiment of the dust seal according to the present invention.

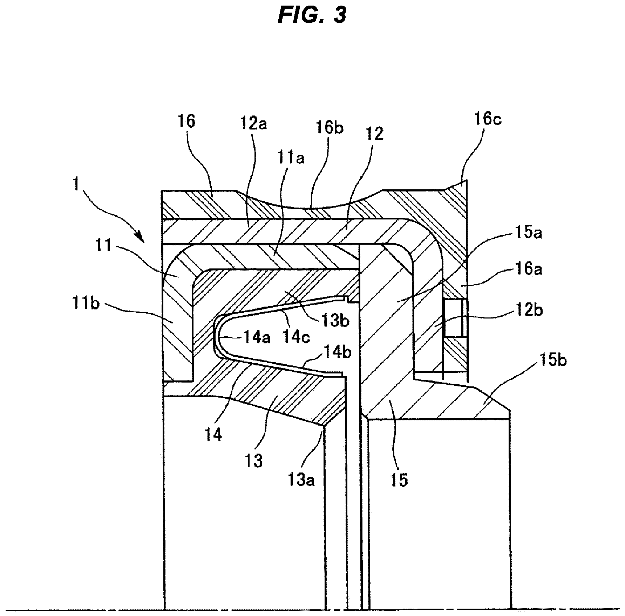

FIG. 3 is a half cross-sectional view cut along the plane passing through the axial center illustrating a non-mounting state of the preferable embodiment of the dust seal according to the present invention.

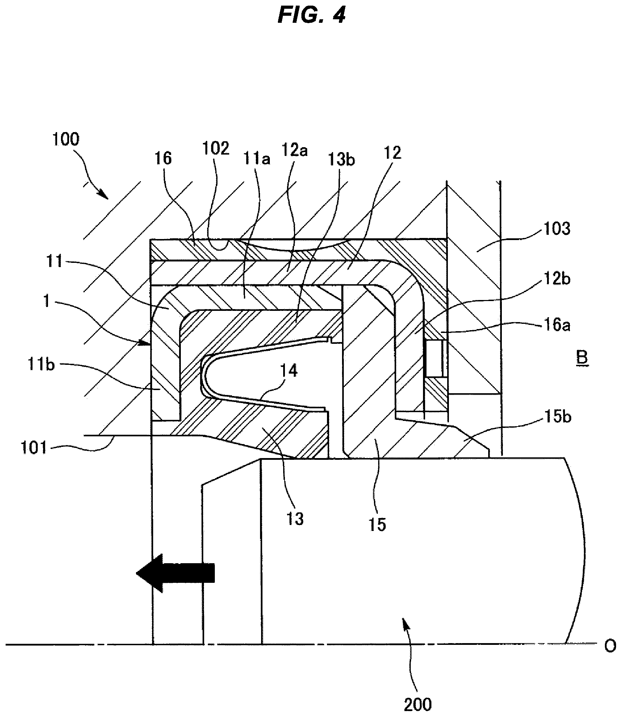

FIG. 4 is a half cross-sectional view cut along the plane passing through the axial center illustrating a process of inserting a shaft in the preferable embodiment of the dust seal according to the present invention.

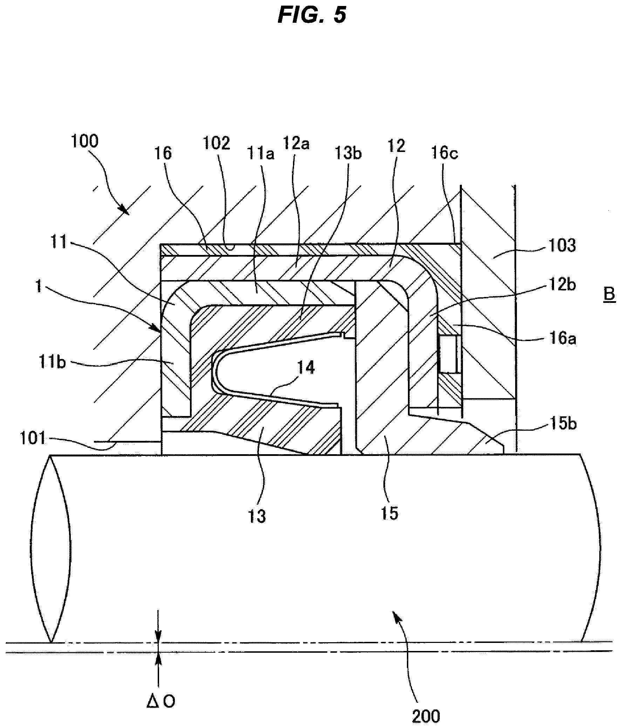

FIG. 5 is a half cross-sectional view cut along the plane passing through the axial center illustrating a state where the shaft is eccentric in a mounting state in the preferable embodiment of the dust seal according to the present invention.
FIG. 6 is a half cross-sectional view cut along the plane passing through the axial center of a mounting state illustrating an example of a conventional dust seal.

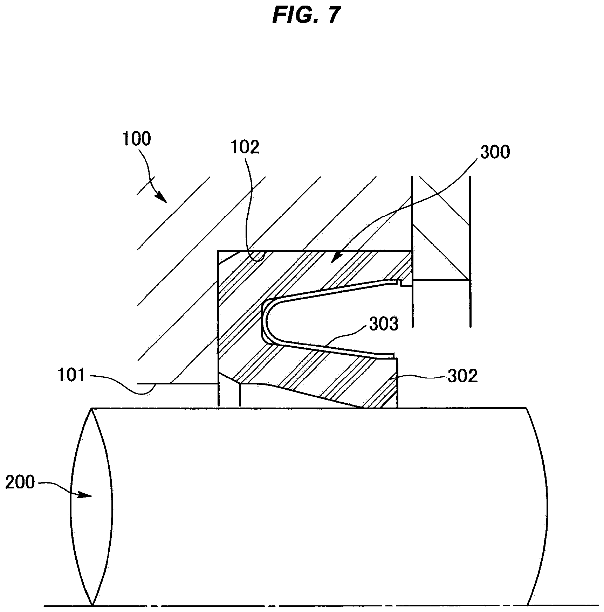

FIG. 7 is a half cross-sectional view cut along the plane passing through the axial center of a mounting state illustrating a different example of a conventional dust seal.

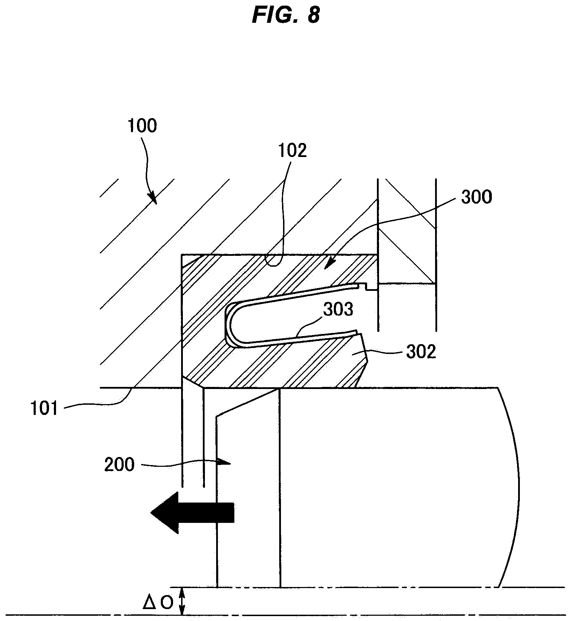

FIG. 8 is a half cross-sectional view cut along the plane passing through the axial center illustrating a process of inserting a shaft in the different example of the conventional dust seal.

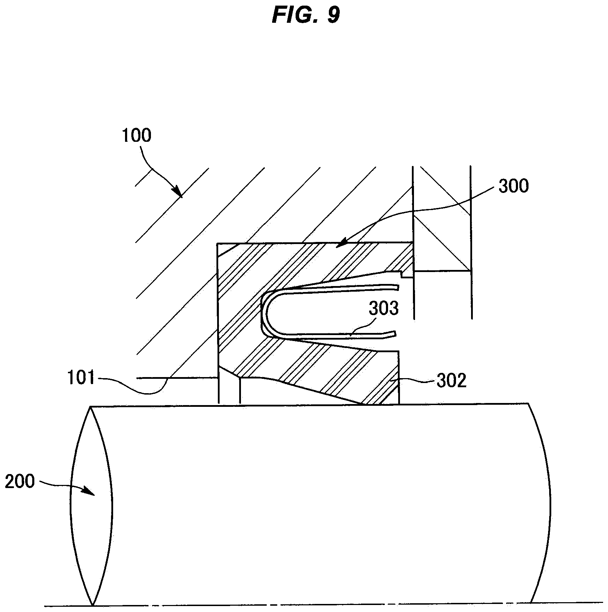

FIG. 9 is a half cross-sectional view cut along the plane passing through the axial center illustrating a state where a plate spring is plastically deformed in the different example of the conventional dust seal.

### Description of Embodiments

A preferable embodiment of a dust seal according to the present invention is described with reference to the drawings.

FIG. 1 illustrates a state where a dust seal 1 is used for a rod seal system of a hydraulic cylinder device. The rod seal system illustrated in FIG. 1 seals a housing 100 provided in a cylinder end portion of the hydraulic cylinder device and a shaft 200 which is inserted through a shaft hole 101 in the housing 100 to move back and forth in the axial direction. The rod seal system is provided with a main seal 400 preventing the leakage of an operation oil of a hydraulic chamber A in the cylinder, a buffering 500 which is disposed inside the main seal 400 (hydraulic chamber A side) to prevent the hydraulic pressure from the hydraulic chamber A from directly acting on the main seal 400, and the dust seal 1 which is disposed on the axial outside of the main seal 400 to prevent the entrance of muddy water or dust from an outside space B. The main seal 400, the buffering 500, and the dust seal 1 are individually held in a seal mounting groove 102 having an annular shape formed in the outer end of the shaft hole 101 in the housing 100.

The dust seal 1 is provided with reinforcing rings 11 and 12 integrally fitted to each other and held in the seal mounting groove 102 of the housing 100, a seal lip 13 which is integrally provided in one reinforcing ring 11 of the reinforcing rings 11 and 12 and a tip of which is brought into a close and slidable contact with the outer peripheral surface of the shaft 200, a plate spring 14 biasing the seal lip 13 toward the outer peripheral surface of the shaft 200, a guide ring 15 which is disposed on the axial outside of the seal lip 13 and an outer diameter portion of which is sandwiched between the reinforcing rings 11 and 12, and an outer peripheral elastic body 16 integrally provided in the reinforcing ring 12.

The one reinforcing ring 11 contains metal. As illustrated in FIG. 2 and FIG. 3, the reinforcing ring 11 has a fitting cylindrical portion 11a and a flange portion 11b extending from an end portion serving as the axial inside to the inner diameter side in a mounting state of the fitting cylindrical portion 11a. The shape (cross-sectional shape illustrated in the figures) cut along the plane passing through the axial center forms an L shape.

The other reinforcing ring 12 contains the same metal as that of the reinforcing ring 11. The reinforcing ring 12 has a fitting cylindrical portion 12a, the inner peripheral surface of which is fitted to the outer peripheral surface of the fitting cylindrical portion 11a of the reinforcing ring 11 with appropriate interference, and a flange portion 12b extending from an end portion serving as the axial outside to the inner diameter side in a mounting state of the fitting cylindrical portion 12a. The shape cut along the plane passing through the axial center forms an L shape reverse to the L shape of the reinforcing ring 11 in the axial direction.

The seal lip 13 contains a rubber elastic body (rubber materials or synthetic resin materials having rubber-like elasticity). The seal lip 13 is integrally molded with the reinforcing ring 11 in an outer peripheral base portion 13b. In detail, the outer peripheral base portion 13b is integrally joined to the inner peripheral surface of the fitting cylindrical portion 11a of the reinforcing ring 11 and the inside surface of the flange portion 11b. The seal lip 13 extends from an inner diameter portion of the outer periphery base portion 13b in a conical cylindrical shape in which the diameter of an end portion on the axial outside decreases. The seal lip 13 brings a lip tip 13a of an inner diameter in which the shape cut along the plane passing through the axial center forms a V shape into a close and slidable contact with the outer peripheral surface of the shaft 200.

The plate spring 14 contains an annular metal thin plate. The plate spring 14 has a bent portion 14a, an inner peripheral spring portion 14b on the inner peripheral side thereof, and an outer peripheral spring portion 14c on the outer peripheral side. The shape cut along the plane passing through the axial center forms a U shape. In the plate spring 14, a slit (not illustrated) reaching the outer peripheral spring portion 14c side via the bent portion 14a from the tip of the inner peripheral spring portion 14b and a slit (not illustrated) reaching the inner peripheral spring portion 14b side via the bent portion 14a from the tip of the outer peripheral spring portion 14c are alternately formed in the circumferential direction. Therefore, the plate spring 14 extends in the circumferential direction while meandering in a zigzag manner in the axial direction by the slits. This enables elastically bending deformation in the radial direction.

The plate spring 14 is fitted to an annular groove having a cross-sectional U shape between a body portion and the outer peripheral base portion 13b of the seal lip 13. In the mounting state thereof between the housing 100 and the shaft 200 illustrated in FIG. 1 and FIG. 2, the plate spring 14 is in a state of appropriately receiving bending deformation in the radial direction through the seal lip 13 from a non-mounting state illustrated in FIG. 3. The inner peripheral spring portion 14b elastically biases the lip tip 13a of the seal lip 13 in the inner diameter direction by the reaction force to compensate for the tension force of the seal lip 13 to the outer peripheral surface of the shaft 200.

The guide ring 15 is produced by bearing materials, such as bronze, for example. The guide ring 15 has an outward flange portion 15a and a scraper portion 15b which is projected to the axial outside from an inner diameter end portion of the outward flange portion 15a and in which the diameter of the outer peripheral surface decreases toward the axial outside. The guide ring 15 is placed concentrically with the reinforcing rings 11 and 12 due to the fact that the outward flange portion 15a is sandwiched between the fitting cylindrical portion 11a of the one reinforcing ring 11 and the flange portion 12b of the other reinforcing ring 12. The inner diameters of the outward flange portion 15a and the scraper portion 15b are formed into a size which allows the insertion of the shaft 200 with a minute gap, i.e., a diameter slightly larger than the outer diameter of the shaft 200.

The outer peripheral elastic body 16 contains a rubber elastic body (rubber materials or synthetic resin materials having rubber-like elasticity), such as NBR (nitrile rubber) and H-NBR (hydrogenated nitrile rubber). The outer peripheral elastic body 16 is joined to the outer peripheral surface of the fitting cylindrical portion 12a of the reinforcing ring 12 and extends a side portion elastic body 16a joined to the outside surface of the flange portion 12b of the reinforcing ring 12 from an axial outer end portion thereof.

In an axial intermediate portion in the outer peripheral surface of the outer peripheral elastic body 16, an annular recessed portion 16b is formed which reduces the compression reaction force of the outer peripheral elastic body 16 in the radial direction. In an axial outside end portion in the outer peripheral surface of the outer peripheral elastic body 16, a seal projection 16c for securing the pressure contact state to the inner peripheral surface of the seal mounting groove 102 even in a state where the outer peripheral elastic body 16 is deformed in the radial direction following mutual eccentricity of the housing 100 and the shaft 200 is formed.

The dust seal 1 having the above-described configuration is mounted in a state of being prevented from releasement due to the fact that the reinforcing rings 11 and 12 are held in the seal mounting groove 102 of the housing 100 through the outer peripheral elastic body 16 and the plate 103 attached to the outer end of the housing 100 abuts on the side portion elastic body 16a extending from the outer peripheral elastic body 16. The outer peripheral elastic body 16 is placed between the fitting cylindrical portion 12a of the reinforcing ring 12 and the inner peripheral surface of the seal mounting groove 102 in a state of being appropriately compressed in the radial direction. The lip tip 13a of the seal lip 13 directed to the outside space B side slidably and closely contacts the outer peripheral surface of the shaft 200 to thereby prevent the entrance of muddy water or dust from the outside space B into the main seal 400 side illustrated in FIG. 1.

In the dust seal 1, even when the stress relaxation referred to as "permanent set in fatigue" occurs with time in the seal lip 13 containing the rubber elastic body, the stress relaxation as in the rubber elastic body does not occur in the metal plate spring 14 fitted into the annular groove on the outer peripheral side thereof, and therefore the tension force of the seal lip 13 to the outer peripheral surface of the shaft 200 is compensated by the plate spring 14. Therefore, the required sealing surface pressure of the lip tip 13a of the seal lip 13 is maintained over a long period of time.

In a process of placing the dust seal 1 into the seal mounting groove 102 of the housing 100 beforehand, and then inserting the shaft 200 into the shaft hole 101 in the housing 100 as illustrated in FIG. 4 in assembling a device, the shaft 200 passes through the inner periphery of the guide ring 15 so as to be guided concentrically with the reinforcing rings 11 and 12 held in the housing 100. Therefore, the shaft 200 is not largely eccentric to an axial center O of the reinforcing rings 11 and 12. The same applies also to a usage state. Since the shaft 200 is held concentrically with the reinforcing rings 11 and 12 by the guide ring 15, the shaft 200 is not largely eccentric to the axial center O of the reinforcing rings 11 and 12.

Therefore, the seal lip 13 is not largely deformed in a part in the circumferential direction by the eccentricity of the shaft 200 to the reinforcing rings 11 and 12, and the plate spring 14 does not receive deformation exceeding the elastic limit through the seal lip 13. Therefore, the biasing force in the radial direction of the plate spring 14 for compensating for the tension force of the seal lip 13 is not impaired.

When a load in the radial direction arises in the shaft 200 for a certain reason during the use as illustrated in FIG. 5, the load is transmitted to the reinforcing ring 12 through the guide ring 15, so that the outer peripheral elastic body 16 is deformed between the fitting cylindrical portion 12a of the reinforcing ring 12 and the inner peripheral surface of the seal mounting groove 102, whereby the eccentricity ΔO to the shaft hole 101 in the housing 100 is permitted. Moreover, since the compression spring constant in the radial direction is low due to the formation of the annular recessed portion 16b, the outer peripheral elastic body 16 can be easily deformed by the load in the radial direction transmitted from the shaft 200. Therefore, the pressure contact load between the inner peripheral surface of the guide ring 15 and the outer peripheral surface of the shaft 200 is absorbed, so that wear and damage to the guide ring 15 or the shaft 200 can be effectively prevented.

When the eccentricity ΔO arises, the compression amount of the outer peripheral elastic body 16 to the seal mounting groove 102 of the housing 100 decreases in a portion opposite, in the circumferential direction, to the portion in FIG. 5 illustrating a state where the compression amount of the outer peripheral elastic body 16 has increased. On the other hand, the seal projection 16c illustrated in FIG. 3 is formed in the end portion of the outer peripheral elastic body 16, and therefore the required interference to the inner peripheral surface of the seal mounting groove 102 is maintained in the seal projection 16c. Therefore, the sealability between the outer peripheral elastic body 16 and the seal mounting groove 102 of the housing 100 is not impaired.

Also in the state where the eccentricity ΔO as illustrated in FIG. 5 arises between the shaft hole 101 in the housing 100 and the shaft 200, the reinforcing rings 11 and 12 and the shaft 200 are held concentrically with each other by the guide ring 15, and therefore the seal lip 13 is not largely deformed in a part in the circumferential direction and the plate spring 14 does not receive excessive bending deformation exceeding the elastic limit through the seal lip 13. Therefore, the biasing force in the radial direction of the plate spring 14 for compensating for the tension force of the seal lip 13 is not impaired.

In devices to be used in environments where ice crystals, such as frost, and dust adhere to the outer peripheral surface of the shaft 200 exposed to the outside space B from the housing 100, such deposits are peeled off and removed by the guide ring 15 located on the axial outside of the seal lip 13 accompanying the back-and-forth movement in the axial direction of the shaft 200. Moreover, in the embodiment illustrated in the drawings, the scraper portion 15b in which the diameter of the outer peripheral surface decreases toward the axial outside is formed in the inner diameter portion of the guide ring 15, and therefore the deposits on the outer peripheral surface of the shaft 200 are efficiently removed. Therefore, the deposits on the outer peripheral surface of the shaft 200 can be effectively prevented from being caught in a sliding portion of the seal lip 13, the main seal 400 illustrated in FIG. 1, or a sliding portion of the buffering 500 accompanying the back-and-forth movement in the axial direction of the shaft 200, and therefore, excellent sealability by the rod seal system illustrated in FIG. 1 can be maintained.

Therefore, there is no necessity of separately attaching an annular scraper, which is located on the axial outside of the dust seal 1, for peeling off and removing the deposits on the outer peripheral surface of the shaft 200. Therefore, space saving can be achieved.

### Description of Reference Numerals

- 1: dust seal
- 11, 12: reinforcing ring
- 13: seal lip
- 14: plate spring
- 15: guide ring
- 15b: scraper portion
- 16: outer peripheral elastic body
- 100: housing
- 102: seal mounting groove
- 200: shaft

## Claims

1. A dust seal comprising:
a reinforcing ring held on a housing side;
a seal lip which is provided in the reinforcing ring and a tip of which is brought into a close and slidable contact with an outer peripheral surface of a shaft inserted through a shaft hole in the housing so as to be movable back and forth in an axial direction;
a plate spring held on an inner peripheral side of the reinforcing ring and biases the seal lip toward the outer peripheral surface of the shaft; and
a guide ring disposed on an axial outside of the seal lip and supported by the reinforcing ring, wherein
the guide ring, through an inner periphery of which the shaft is inserted, holds the shaft concentrically with the reinforcing ring.

2. The dust seal according to Claim 1, wherein
the reinforcing ring is attached to the housing side through an outer peripheral elastic body.

3. The dust seal according to Claim 1 or 2, wherein
a scraper portion which is projected to an axial outside and in which a diameter of an outer peripheral surface decreases toward the axial outside is formed in an inner diameter portion of the guide ring.
